# EUROPEAN PATENT APPLICATION

(11) **EP 1 168 193 A1**
(43) Date of publication of application: **02.01.2002**
(21) Application number: 01115198.2
(22) Date of filing: 22.06.2001
(51) Int. Cl.: G06F 17/24, G06F 17/60

(54) **Method and system for review of digital content**

(30) Priority: 30.06.2000 US 607810
(71) Applicant: YouWorklt.com, LLC, San Diego, CA 92121 (US)
(72) Inventor: Volk, William, D., Cardiff, CA 92007 (US)
(74) Representative: Winter, Brandl, Fürniss, Hübner, Röss, Kaiser, Polte Partnerschaft

(57) **Abstract**

The present invention provides a system and method for the alteration and approval of a digital image. An initiating user can upload digital content for review by other users approved by the initiating user. The approved users can review the digital content of the webpage, make annotations or alterations if desired, and then approve what was just done or allow others to review the annotations or alterations. The system has a first computer operative to interact with a second computer via a communication medium between the first computer and the second computer. The system further has software that provides a webpage using a digital image and a universal resource locator (URL) identifying the webpage. The software notifies the approved users that the webpage is available for approval or for alteration. Once the approved users have selected either approval or alteration, the software enables the approved users either to approve the webpage or to alter the webpage. The software then logs the approval or the alteration of the webpage.

## Description

### Field of the Invention

The present invention relates to a process and system for annotation and approval of digital images.

### Background

Information on the Internet is generally accessible using a standard Internet browser. The browser issues a request for information, such as a document, and the information is displayed on the client computer. The webpage request and receive protocol can have intermediate steps. These steps can include, for example, content filtering and annotation overlays. Filtering includes pre-screening the content of the webpage by the filter prior to display of the webpage by the browser. The filter parameters are pre-determined and can selectively sort or block content based on pre-determined parameters, such as the inclusion of words or phrases.

Annotation overlays are generally transparent sheets containing graphic matter, such as labels, text, or colored areas, placed over subject material so that it appears that the annotation overlay is incorporated into the subject material. The purpose of the overlay is to alter, or appear to alter, the underlying content. Recent methods for providing annotation overlays require a plurality of servers to store documents. Each document is uniquely identifiable and viewable from a client computer having a browser operative to request and receive documents over a network. When a webpage is requested by a browser a stored overlay group, that is, a group of overlays, that refers to another document is dynamically selected and automatically merged with the original webpage. While the process is invisible to the user, the resulting webpage contains hypertext links to relevant content information that is also available over the Internet. The hypertext links do not appear on the original webpage but do appear on the webpage presented to the user for viewing.

### Summary of the Invention

The present invention provides a method for the recorded review of digital images. The method begins with the step of providing a computer, preferably a server. An initiating user can then upload a digital image to the server. Once the digital image is on the server, the method provides for an original webpage using the digital image. The method also provides for a universal resource locator (URL) identifying the original webpage. The initiating user provides a list of approved users. The approved users from the list are notified that a webpage is available for approval or alteration. The available webpage can be either the original webpage, or an altered webpage as described below. The approved users can access the available webpage. The corresponding access information is logged when the approved users access the available webpage. The approved users can decide either to select approval of the available webpage or to select alteration of the available webpage. If the approved users select approval of the available webpage then the approved users can register an approval, and the registered approval is logged. If the approved users select alteration of the available webpage, then software is implemented that enables the approved users to alter the available webpage, and thereby create an altered webpage. The alterations to the altered webpage are logged. Additionally, a URL is provided that identifies the altered webpage. If an additional approval is required, the method repeats starting with the step of notifying that there is a webpage available for approval or alteration, but with reference to the altered webpage instead of the original webpage. If no additional approval is required, then the approved users can register an approval, and the registered approval is logged, but with reference to the altered webpage instead of the original webpage.

Optionally, the method further comprises the step of sending a notification of approval from the first computer to the approved users when the approval is registered. Also, the original and the altered webpage in the present invention can comprise a plurality of digital images. The approval mentioned above can also be a polling approval. In a polling approval, approval from more than one person is obtained before an entire project is approved.

The present invention provides a system that has a first computer operative to interact with a second computer via a communication medium between the first computer and the second computer. The system further has software that provides a webpage using a digital image. The system's software also provides a URL identifying the webpage. The software can receive a list of approved users. The software notifies the approved users that the webpage is available for approval or for alteration. The software provides the approved users with access to the webpage. The software enables the approved users to decide either to select approval of the webpage or to select alteration of the webpage. Once the approved users have selected either approval or alteration, the software enables the approved users either to approve the webpage or to alter the webpage. The software then logs the approval or the alteration of the webpage.

The present invention thus provides a system and method for the alteration and approval of a digital image. The initiating user can upload digital content for review by other users approved by the initiating user. The approved user can review the digital content of the webpage, make annotations or alterations if desired, and then approve what the approved user has just done or allow other approved users to review the annotations or alterations. The preferable end-result of this collaborative effort allowing all concerned parties input in the review and approval process, is(are) a digital image(s) that have been reviewed and approved by all of the approved users, and all of the approved users have an opportunity to alter or annotate the digital images if the choice is made to do so.

### Brief Description of the Figures

Figure 1 is a schematic view of a system including a first embodiment of the invention.
Figure 2 is a flow chart of the method of the invention.
Figure 3 is a schematic view of a system including a second embodiment of the invention.

### Detailed Description of the Invention

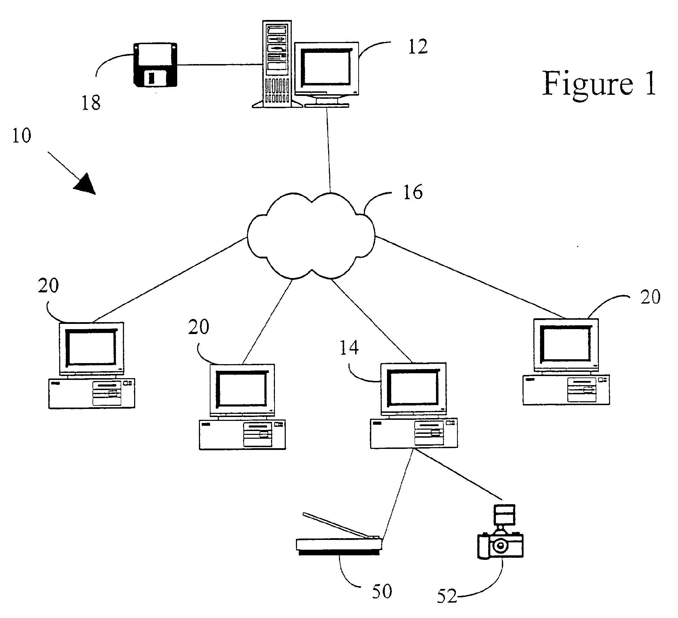

A system **10** comprising a preferred embodiment of the present invention is shown schematically in Figure 1. The system **10** is used to provide a recorded review process of a digital image. The system provides a server **12**. The initiating user **14** can generate a digital image and upload it to the server **12** via the communications medium **16**. The software **18** on the server **12** responds by generating a webpage using the digital image. The initiating user **14** can designate a list of users **20** approved to access and review the webpage. The approved users **20** can alter the webpage, add commentary, erase parts, approve the webpage, and the like. Preferably, the end-product is a digital image that the approved users **20** have had the opportunity to review. A review includes accessing the webpage, determining if the digital content is acceptable "as is," or in need of alteration. Alterations can be changes, additions, or deletions and are part of the review. A review also includes finding the altered webpage acceptable and approving it, approving the altered webpage and making it available for additional review by other approved users **20**, or withholding approval until a later time while making the altered webpage available for additional review by other approved users **20**. An altered webpage is preferably the original webpage with a superimposed markup layer.

Specifically, the system **10** includes a first computer **12**. The first computer **12** is operative to interact with the initiating user **14** and a plurality of approved users **20** via a communication medium **16**. The communication medium **16** is operative between the first computer **12** and second computers representing the initiating user **14** and the approved users **20**. In the preferred embodiment, the first computer **12** is a server computer, but any other suitable device may be used. The communication medium **16** is preferably the Internet. In the embodiment shown in Figure 1, preferably, the approved users **20** and the initiating user **14** use second computers that are desktop personal computers.

The software **18** of the system **10** is preferably resident on the first computer **12**. The initiating user **14** can implement software **18** preferably by uploading a digital image to the server **12**. The digital image can be generated by a device or a computer as described below. Preferably, once implemented, the software **18** is capable of providing a webpage using the provided digital image, and a URL identifying the webpage. The software **18** is further capable of receiving the list of users **20** approved by the initiating user **14** to have access to the webpage. The software **18** can send a notification from the first computer **12** to the approved users **20**. The notification can state that the webpage is available for approval or for alteration. In addition, the software **18** can provide the approved users **20** with access to approve or alter the webpage. The software **18** offers the approved user **20** the option of selecting approval of the webpage or alteration of the webpage. Further, the software **18** then enables the approved users **20** either to approve or to alter the webpage. Once the approved users **20** have accessed the webpage and chosen to approve the webpage or alter the webpage the software **18** logs the approval of the webpage or the alteration to the webpage.

The digital image can be text or any image, in digital format. The digital image can be, for example, a digitized photograph created by scanning a photograph. Exemplary digital images are: digital images derived from non-digital images digitized by a scanner **50**; digital images generated by a digital device, such as, a digital camera **52**; and digital images generated by a computer program, such as, AutoCad® from AutoDesk, Inc. (San Rafael, CA) or Macromedia Fireworks® from Macromedia, Inc. (San Francisco, CA). Other examples of digital images include digital versions of maps, logos, advertisements, and engineering drawings.

The software **18** enables the initiating user **14** to upload the digital image to the server **12**. This is preferably accomplished by one of three methods. The first is a standard hyper text transfer protocol (HTTP) or file transfer protocol (FTP) that opens a dialog box on command and facilitates the digital image transfer. This method is preferred in situations where the digital image resides as a file on a computer hard drive. The second enables the initiating user **14** to print or fax a digital image to the server **12**. This is preferably done by a virtual printer driver. This is preferred in situations where the digital image is generated by a computer program that does not have a convenient, or any, image export feature, for example, QuarkXpress® from Quark, Inc. (Denver, CO). This allows the print or fax feature of the computer program to communicate directly with the software **18**. The third is to employ the TWAIN feature that is commonly used by such devices as scanners or digital cameras. TWAIN defines a standard software protocol and application programming interface (API) for communication between software applications and image acquisition devices. It should be noted that any of the approved users **20** shown in Figure 1 could act as the initiating user **14**.

The software **18** creates a webpage using the digital image. Preferably, the webpage can contain a single digital image, multiple digital images, or thumbnails that link to digital images on other webpages. The software **18** can generate a URL uniquely identifying the webpage that has the digital image. The software **18** can optionally create multiple webpages, each webpage having a corresponding URL uniquely identifying it, and each of the multiple webpages having a copy of the digital image on it. Preferably, these URLs are assigned to individuals so that a single URL is associated with a single individual. When a browser is directed to one of the multiple webpages having a corresponding and unique URL, the invention can associate the alterations or approval of the webpage, with the single individual to whom the URL was assigned. The URL assignment to the individuals can be made at any time after the URL is generated, preferably by the initiating user **14**. The time when the URL is generated is described below. The multiple URLs allow separate individuals to maintain separate altered webpages. Each of the altered webpages can have its own separate group of markup layers. In addition, the software **18** can optionally create multiple webpages of digital images.

When the initiating user **14** implements the software **18** to generate a webpage containing a digital image, the software **18**, in response, can notify the approved users **20** that the webpage is available for review, that is, approval or alteration. The notification is preferably made by e-mail. Even more preferably, the notification contains the URL that identifies the webpage containing the digital image with a hypertext link embedded in the e-mail.

Alternatively, if the URL is not provided with the notification of availability, the URL may be provided in a different manner. For example, when the initiating use **14** starts a project by uploading a digital image to the server **12**, a URL can be forwarded to the approved users **20**. The definition of "project" is discussed below. In another example, the URL can be pre-generated. By pre-generated it is meant generated prior to the uploading of the digital image, and/or prior to the creation of a webpage using the digital image. The URL can be written, for example, on a card or in a letter. The card or letter can optionally contain instructions, a description, or other information in addition to the URL. For example, a card or letter containing a URL for a webpage that has yet to be generated can be printed. In this example, the card can be provided to an individual who does not wish to provide contact information, such as his e-mail address.

A project begins when the initiating user **14** uploads a digital image to server **12** or causes a URL to be generated. The project ends when all of the necessary approvals have been made. The project also contains all of the intermediate steps of review, such as the alteration, and/or approval, of the digital image content of a webpage.

The software **18** can also notify by other means, such as a call or message, which are preferably computer generated. Useful devices for notification include, but are not limited to, pagers, telephones, wireless web phones, and personal digital assistants. An exemplary notification by telephone can simply include the information that a webpage containing a digital image is ready for accessing at the corresponding URL. The corresponding URL can be listed on the above mentioned card that had previously been provided. The invention also provides for the notification to include the URL but not to include the availability of the webpage. If the availability of the webpage is not provided in the notification the approved user **20** would need only to check the URL to see whether, and when, the webpage was available.

After the approved user **20** accesses the webpage and approves of the content of the webpage, the approved user **20** can signal approval. The approved user **20** signals the approval preferably by pressing a button on a pop-up box. In the preferred embodiment, the approval can take the form of a digital signature attesting that the approved user **20** approves of the webpage and its contents. A notification regarding the approval can optionally be sent to previously designated parties, or the approval can be noted and saved to a database capable of recording such events.

Alternatively, the approval can take the form of a polling approval. Polling approval is particularly useful in situations where approvals are needed from multiple parties before the total project is approved. When the polling approval option is implemented, the approval can be noted on a separate status page and logged to a database or a file. The polling approval option is not mutually exclusive to the notification option and the two approval methods can be used together. Because the original and altered webpages can contain multiple digital images, or links to the digital images, the present invention includes approval options for the digital images individually or collectively. This allows some digital images to be approved while other digital images on the same webpage are altered prior to approval. Total project approval is approval of all of the digital images by all of the approved users **20**, or all of the necessary approved users when the polling approval method is used. This allows the initiating user **14** to authorize certain of the approved users **20** to approve of the original or altered webpage before the entire project is approved, while still allowing access for alteration and approval to users that do not have the authority to approve the entire project.

The present invention can provide pre-determined statistics to the approved user **20** accessing a status page. Preferably, the status page is a webpage. The statistics can be of the approval or alteration status of the original webpage, or the altered webpage. The statistics can further represent information regarding the digital image, any logged information, and any other data or information content deemed to be relevant to the creator of the status page at the time the status page is created. The status page can be either passive, for example, waiting for someone to access it, or it can be active, for example, sent to a pre-determined list of individuals in response to certain events. For example, at the end of some period of time, a week for instance, a status page, or its link, can be e-mailed or faxed to a designated project manager. As another example, parties can be designated to receive the status page when the polling approval is complete. That is, when the last party needed for total approval in a polling approval situation signals approval, and the approval is logged to the status page, the software **18** can respond by sending the status page to all of the parties who are designated to receive the status page.

The approved users **20** can make alterations of the webpage. The alterations are made using software **18** described below. An alteration can be an addition, a deletion, or a change to any webpage. An alteration preferably does not change the original digital image or the webpage. Instead, it creates independent overlays, and these overlays are preferably objects. The independent overlay preferably exists as a markup layer superimposed over the digital image. These independent overlays do not necessarily change the webpage or the corresponding URL. Instead, the independent overlays are stored separately from the webpage and are made available to any of the approved users **20** at the request of the approved user **20**. The independent overlays can be individually manipulated, changed, or removed entirely. The alteration is preferably stored as a command recognizable to the software **18**. A series of alterations can be stored as a list of commands. The commands can be run sequentially to recreate the alteration in sequential order. However, individual alterations can also be removed, added, or changed from the series of alterations. Optionally, the digital image itself may be changed or the alterations merged with the digital image to form an altered digital image. Also, the webpage may optionally be changed or merged with one or more independent overlay. In the preferred embodiment, all of the alterations are available to all of the users.

Preferably, the software **18** includes dimensioning rulers. The dimensioning rulers can establish a scale, dimensions, or a coordinate system. In this embodiment, the software **18** can relate coordinates on the digital image to data represented by the digital image. For example, coordinates on a digital image of a map can correspond to an actual location represented by a point on the map. As another example, coordinates on a digital image of a bar graph can correspond to the data values represented by the bar graph. Preferably, the software **18** can link the alterations back to the original data represented in the digital image.

The webpage available for alteration or approval can be simultaneously accessed by more than one approved user **20**. In this collaborative mode of operation, the webpage is dynamically updated whenever an alteration or approval is made by any approved user **20** so that the alteration or approval is reflected on the webpage being viewed by all of the approved users **20** who are simultaneously accessing the webpage. Alternatively, when copies of the digital image appear on more than one webpage, alterations to any of the webpages containing a copy of the digital image can reflected on all of the webpages containing a copy of the digital image. Preferably, the software **18** contains intrinsic listening and broadcasting functions. The send and receive updates are preferably standard Hyper Text Transfer Protocol (HTTP) get and post commands.

Preferably, the software **18** is an applet. The software **18** can also be an ultra-lean client, which is a small applet, and which has the ability to run on systems that can access the server **12**, preferably via the communication medium **16,** but cannot run standard applets. The applet could be implemented by, for example, ActiveX or a Netscape® Plug-In from Netscape Communications Corporation (Mountain View, CA). In addition, software **18** can be completely server based. In a completely server-based example, software **18** can receive input from the approved user **20** and the input can direct alterations or make approvals that occur on the server **12** but not on the approved user's **20** computer. This example is preferred for web appliances, and the like, that have a limited capability to perform such operations.

The system **10** preferably uses the software **18** to log information to a relational database. A relational database is a collection of data items organized as a set of formally-described tables from which data can be accessed or reassembled in different ways without having to reorganize the database tables. Examples of commercially available relational databases useful in the present invention include Microsoft SQL Server® 7.0 from Microsoft (Redmond, WA) and Oracle8*i*® from Oracle (Redwood Shores, CA). Optionally, the information could be logged to a standard file in a standard directory or an object database.

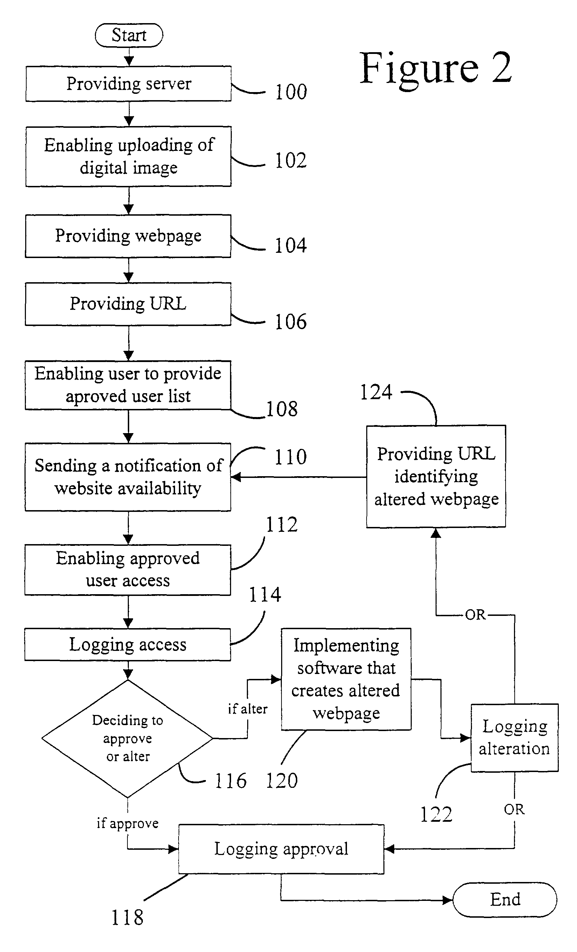

The present invention also provides a method of using the system **10** shown by the flowchart in Figure 2. The method entails the step **100** of providing a computer, preferably a server **12.** The method also has the step **102** of enabling the initiating user **14** to upload a digital image to the server **12** and the step **104** of providing the digital image as an original webpage. The initiating user **14** can provide the digital image and the list of approved users **20**. The approved users **20** can review, that is, provide alteration or approval, of the digital image on the webpage. Therefore, both the initiating user **14** and the approved users **20** can implement software **18**.

The method also includes the step **106** of providing a URL identifying the original webpage. The URL allows its corresponding webpage to be retrieved by a standard Internet web browser. Exemplary Internet web browsers include Netscape Navigator® from Netscape Communications Corporation and Microsoft Internet Explorer® from Microsoft.

Further, the method has the step **108** of enabling the initiating user **14** to provide the list of approved users **20** for identification. Once the list is provided, the software **18** responds in step **110** by sending a notification to the approved users **20** stating there is a webpage that is available for either approval or alteration. The notification is from the server **12** to the approved users **20** from the above list and is preferably sent by e-mail. The notification preferably contains a hypertext URL to allow the recipient to link directly to the webpage. The available webpage that is the subject of the notification is either the original webpage or an altered webpage.

The method includes the step **112** of enabling the approved users **20** to access the available webpage. This is preferably an active feature in which potential users who are not on the approved user **20** list are denied access to the available webpage. In this manner, non-approved users are not allowed access and the available website is kept confidential. The method also has the step **114** of the software **18** responding when approved users **20** access the available webpage by logging corresponding access information. Exemplary access information can include the access time, the access date, the identity of the approved user **20** accessing the available webpage, and the duration of the time the available website was accessed. The log is any standard log that is capable of keeping a list of information.

The method provides for the step **116** of enabling the approved users **20** who access the available webpage to decide either to select approval or to select alteration of the available webpage. If the approved user **20** approves of the content of the available webpage and selects approval then what follows are the steps **118** of enabling the approved user **20** to register approval, and the software **18** logging the registration of that approval. But, if the approved user **20** who is accessing the available website decides to make alterations, then the method continues with the step **120** of implementing software that enables the approved user **20** to make the desired alterations. The software then creates an altered webpage reflecting the original webpage with the alterations. Logging the alterations to the altered webpage is a step **122** of the method. Preferably, the alterations are logged as discrete steps to allow for a single or multiple undo function that may optionally be included in the software.

The method also includes the step **124** of providing a URL identifying the altered webpage. The method of the present invention then allows for an option between two choices. The first choice responds to the need for an additional approval of the altered webpage. If this choice is selected then the method repeats itself starting with the step **110** of sending a notification to the approved users **20** that there is a webpage available for approval or alteration. This loop can continue until such a point as all the necessary approvals have been made or no further alterations are made. The second choice is for situations when no additional approval is necessary after the alterations. The approved user **20** can register approval at this stage, then the step **118** of logging the approval is provided.

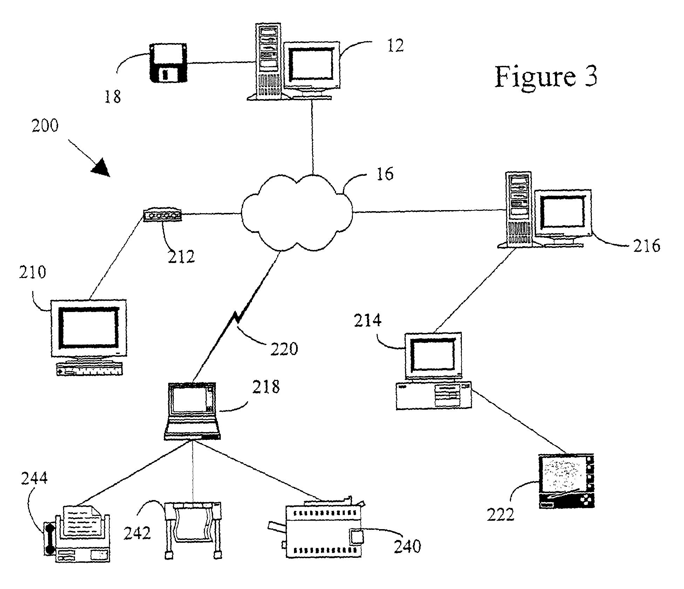

A system **200** comprising an alternative embodiment of the present invention is shown schematically in Figure 3. This system is similar to the first embodiment shown in Figure 1. This is indicated by the use of the same reference numbers for corresponding parts in Figure 1 and Figure 3. The system **200** differs from the system **10** in terms of the hardware that interacts with the server **12**.

In a first example, the initiating user can connect to the server **12** from a desktop home computer **210** via a modem **212**. In this example, the modem **212** allows the user to connect by means of the communication medium **16.** Alternatively, the modem **212** can directly dial to the server **12**. Alternatively, the initiating user can connect via a workstation **214** connected to a network server **216.** It should be noted that the approved users can connect to the server **12** by the same means as the initiating user.

In a second example, the initiating user can connect to the server **12** from a portable computer **218**, such as a laptop. In this example, the laptop can connect to the communication medium **16** by means of a wireless connection **220**.

In a third example, the initiating user can connect to the server **12** by means of a synchronizing feature of a personal digital assistant **222**. Exemplary personal digital assistants **222** are the Palm Pilot® from Palm, Inc. (Santa Clara, CA) and the Blackberry® from Research In Motion, Ltd. (Waterloo, Ontario).

In a fourth example, the initiating user can publish or print any webpage, or any part of a webpage, such as the digital image or one of the markup layers, from the server **12**. The digital image can be outputted from the server **12** to a designated device. Exemplary devices include a printer **240**, a plotter **242**, a fax machine **244**, or a laptop computer **218**.

Although preferred embodiments of the invention have been shown and described, it should be understood that various modifications and substitutions, as well as rearrangements and combinations, can be made by those skilled in the art, without departing from the spirit and scope of this invention.

## Claims

1. A method comprising:
(a) providing a computer;
(b) enabling an initiating user to upload a digital image to said computer;
(c) providing said digital image as an original webpage;
(d) providing a URL identifying said original webpage;
(e) enabling said initiating user to provide a list of approved users;
(f) sending a notification of a webpage available for approval or alteration from said computer to said approved users, with said available webpage being either said original webpage or an altered webpage;
(g) enabling said approved users to access said available webpage;
(h) responding to approved users accessing said available webpage by logging corresponding access information;
(i) enabling said approved users to decide either to select approval or to select alteration of said available webpage;
(j) if approval of said available webpage is selected then enabling said approved users to register an approval, and logging said registered approval; and
(k) if alteration of said available webpage is selected then: implementing software that enables said approved users to alter said available webpage, thereby creating an altered webpage; logging alterations to said altered webpage; providing a URL identifying said altered webpage; and if additional approval is required, repeating steps (f) to (i) with reference to said altered webpage instead of said original webpage, and if no additional approval is required, repeating step (j) with reference to said altered webpage instead of said original webpage.

2. A method as defined in claim 1 further comprising:
(1) sending from said computer to said approved users a notification of approval if said approval is registered.

3. A method as defined in claim 1 wherein said altered webpage comprises said original webpage with a superimposed markup layer.

4. A method as defined in claim 1 wherein said URL identifying said altered webpage is the same URL as the URL identifying the original webpage.

5. A method as defined in claim 1 wherein said original webpage comprises a plurality of digital images.

6. A method as defined in claim 1 wherein said approval is a polling approval, whereby approval from more than one person is obtained before an entire project is approved.

7. A system comprising:
a first computer operative to interact with a second computer via a communication medium between said first computer and the second computer; and
software capable of:
(a) providing a digital image as a webpage;
(b) providing a URL identifying said webpage;
(c) receiving a list of approved users;
(d) sending a notification from said first computer to said approved users that said webpage is available for approval or for alteration;
(e) providing said approved users access to said webpage for approval or for alteration of said webpage;
(f) enabling said approved users to decide either to select approval or to select alteration of said webpage;
(g) enabling said approved users either to approve or to alter said webpage; and
(h) logging said approval or said alteration to said webpage.

8. A system as defined in claim 7 wherein said first computer is a server computer.

9. A system as defined in claim 7 wherein said notification is an electronic-mail message.
